# EUROPÄISCHE PATENTSCHRIFT

(11) **EP 0 930 218 B1**
(45) Veröffentlichungstag und Bekanntmachung des Hinweises auf die Patenterteilung: **27.02.2002**
(21) Anmeldenummer: 98124174.8
(22) Anmeldetag: 21.12.1998
(51) Int. Cl.: B62D 7/15

(54) **Schwerlastkraftwagen mit wenigstens zwei Vorderachsen mit lenkbaren Rädern**
Heavy transport motor vehicle with at least two front axles with steerable wheels
Véhicule de transport lourd à moteur avec au moins deux essieux avant à roues directrices

(30) Priorität: 17.01.1998 DE 19801590
(43) Veröffentlichungstag der Anmeldung: 21.07.1999
(73) Patentinhaber: MAN Nutzfahrzeuge Aktiengesellschaft, 80976 München (DE)
(72) Erfinder: Weiner, Martin, 85635 Sigersbrunn (DE); Gühlstorf, Thomas, 81549 München (DE); Mendler, Hardy, 88317 Aichstetten (DE); Rössle, Erich, 81925 München (DE); Stummer, Josef, Dipl.-Ing., 80935 München (DE)

(56) Entgegenhaltungen:
- EP-A- 0 256 941
- EP-A- 0 477 816
- WO-A-92/06881
- DE-C- 3 833 421
- DE-C- 19 546 733
- US-A- 4 856 814

## Beschreibung

Die Erfindung betrifft einen Schwerlastkraftwagen mit wenigstens zwei baugleich ausgebildeten Vorderachsen mit lenkbaren Rädern und weiteren Merkmalen entsprechend dem Oberbegriff der Ansprüche 1 bis 4.

Aus der DE 33 38 011 A1 ist ein Lenksystem bekannt, bei dem für eine Vorderachse eine herkömmliche Servolenkung und für die Steuerung einer weiter hinten angeordneten Achse des Fahrzeuges eine elektronisch-hydraulische Einrichtung vorgesehen ist.

Aus der EP 0256941 A1 ist ein Schwerlastkraftwagen nach dem Oberbegriff der Ansprüche 1 bis 4 bekannt, dessen beide baugleiche Vorderachsen in einem Doppelachsaggregat zusammengefasst sind, wie es sonst nur im Hinterachsebereich zur Anwendung kommt. Dieses bekannte Vorderachs-Doppelachsaggregat ist um eine zentrale Achse pendelnd über je Achsseite ein gemeinsames Blattfederpaket am Fahrzeugrahmen angelenkt. Außerdem sind die Räder beider Vorderachsen mechanisch über ein relativ kompliziertes Lenkgestänge lenkbar, wobei zur Kraftunterstützung ein Hydraulikkolben vorgesehen ist.

Aus der DE 38 33 421 C1 ist ferner ein Kraftfahrzeug mit einer hydraulischen Lenkung der Räder der Hinterachse abhängig von Lenkeinschlag der Vorderachsräder bekannt. Zusätzlich ist dort eine Sicherheitseinrichtung vorgesehen, die eine hydraulische Kopplung der Vorderradlenkung mit der Hinterradlenkung ermöglicht, falls ein Systemfehler auftritt.

Serienmäßig gebaute Schwerlastkraftwagen weisen den bisherigen gesetzgeberischen Vorschriften gehorchend eine rein mechanische Kopplung zwischen den Lenkorganen der vorderen und hinteren Vorderachse auf. Die hierzu notwendigen Koppelstangen sind aber nur schwierig am Fahrzeug unterzubringen und in der Regel gekröpft ausgebildet, was bei extremen Lenkkräften durchaus zu Verbiegungen oder gar zu einem Bruch der Koppelstangen oder deren Lagerstellen führen konnte.

Es ist demgegenüber daher Aufgabe der Erfindung, einen Schwerlastkraftwagen der gattungsgemäßen Art mit solchermaßen angelenkten Vorderachsen und Lenkungsorganen für die Räder auszustatten, dass sich eine Gewichtsreduzierung, weniger Platzverbrauch am Fahrzeug und eine Kostenreduzierung gegenüber bisherigen vergleichbaren Lösungen bei trotzdem hohem Sicherheitsstandard ergibt.

Diese Aufgabe ist erfindungsgemäß durch Schwerlastkraftwagen mit den in den Ansprüchen 1 bis 4 angegebenen Merkmalen gelöst.

Vorteilhafte Ausgestaltungen und Weiterbildungen dieser Lösungen sind in den abhängigen Unteransprüchen angegeben.

Allen vier erfindungsgemäßen Lösungen gemeinsam ist die Baugleichheit und Aufhängungsgleichheit der Vorderachsen. Durch diese Vereinheitlichung ergeben sich wesentlich höhere Stückzahlen und somit kalkulatorisch günstigere Herstellkosten für die Vorderachsen. Weil die bisher notwendigen Koppelstangen zwischen den Lenkungsorganen der vorderen und hinteren Vorderachse nun weggefallen sind, ist jetzt freier Bauraum für eine günstigere Gestaltung des Fahrzeugs oder auch die Anbringung anderer Teile in diesem Bereich vorhanden. Außerdem ist durch den Wegfall der Koppelstangen eine Schadensquelle am Fahrzeug weggefallen.

Durch die elektrohydraulische Steuerung der Lenkung der Räder der hinteren Vorderachse(n) ergeben sich folgende Vorteile:
- Einfederungsfehler der Lenkung können durch die Elektronik (Rechner) kompensiert werden.
- Der Wendekreis des Schwerlastkraftwagen kann verringert werden, weil der Lenkeinschlag der Räder der hinteren Vorderachse verändert werden kann durch entsprechende Steuerung über die Elektronik (Rechner).
- Der Reifenverschleiß wird stark verringert.
- Die Lenkung ist rad- und achsabstandsunabhängig, es sind lediglich auf jeden Fall bezogen die Elektronik (Rechner) entsprechend zu programmieren bzw. in dieser entsprechende Datensätze/Kennfelder abzuspeichern.
- Bei der Lösung gemäß Anspruch 3 und 4 können jeweils zwei im Vergleich zu den Lösungen gemäß Anspruch 1 und 2 kleinere Druckzylinder für die Lenkung der Räder der hinteren Vorderachse(n) verwendet werden, es entfallen dann auch Spurstange und Spurhebel mit der Folge, daß sich der Spur-Differenzwinkel fahrzustandsabhängig frei regeln läßt.
- Es ergibt sich eine Verbesserung des Fahrverhaltens, weil die Lenkung der Räder der hinteren Vorderachse(n) abhängig von bestimmten Fahrbetriebszuständen eigenständig und in Grenzen auch asynchron zu den Lenkeinschlägen der Räder der vorderen Vorderachse erfolgen kann, was ebenfalls durch die Elektronik (Rechner) geregelt und gesteuert wird.
- Sofern der Schwerlastkraftwagen bereits über einen Bordrechner oder Fahrzeugführungsrechner verfügt, kann dieser auch die Funktion des Rechners für die Lenkung der Räder der hinteren Vorderachse(n) übernehmen.

Nachfolgend sind die vier erfindungsgemäßen Lösungen anhand von in der Zeichnung dargestellten Beispielen noch näher erläutert. In der Zeichnung zeigen:
- Fig. 1: eine Ausführungsform der ersten erfindungsgemäßen Lösung in Seitenansicht,
- Fig. 2: die Ausführungsform gemäß Fig. 1 in Draufsicht,
- Fig. 3: eine Ausführungsform der zweiten erfindungsgemäßen Lösung in Seitenansicht,
- Fig. 4: die Ausführungsform gemäß Fig. 3 in Draufsicht,
- Fig. 5: eine Ausführungsform der dritten erfindungsgemäßen Lösung in Seitenansicht,
- Fig. 6: die Ausführungsform gemäß Fig. 5 in Draufsicht,
- Fig. 7: eine Ausführungsform der vierten erfindungsgemäßen Lösung in Seitenansicht,
- Fig. 8: die Ausführungsform gemäß Fig. 7 in Draufsicht,
- Fig. 9: ein elektronisch-hydraulisches Steuerschema zur erfindungsgemäßen ersten und zweiten Lösung, und
- Fig. 10: ein elektronisch-hydraulisches Steuerschema zur erfindungsgemäß dritten und vierten Lösung.

In den Figuren sind gleiche bzw. einander entsprechende Teile mit gleichen Bezugszeichen angezogen.

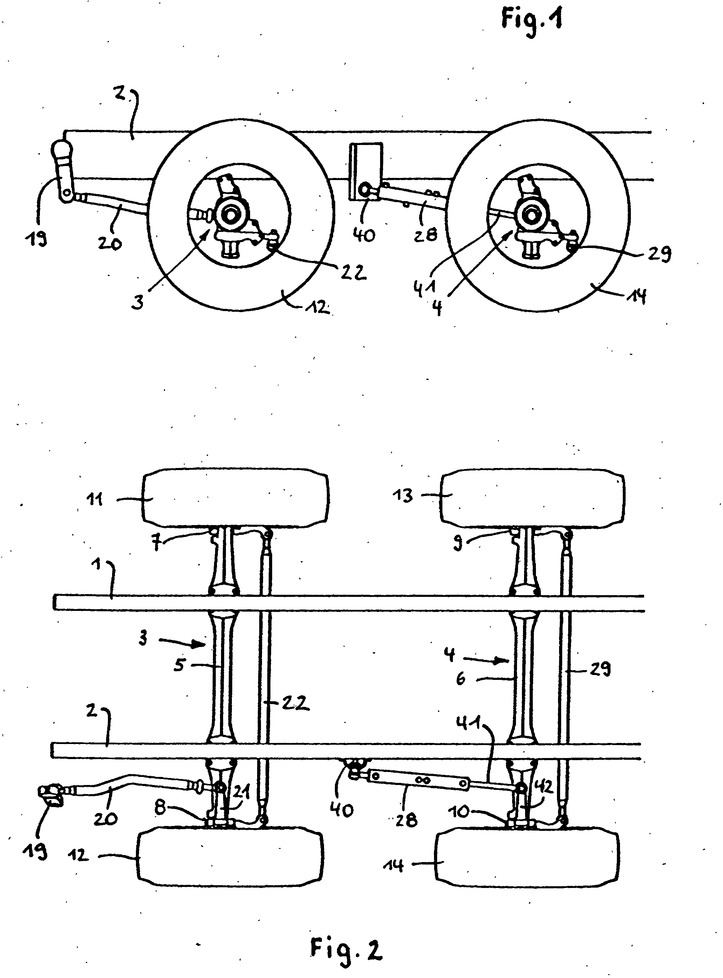

Von dem mehrachsigen Schwerlastkraftwagen mit seinen wenigstens zwei Vorderachsen sind in der Zeichnung nur jene Teile dargestellt, die für das Verständnis der Erfindungen notwendig sind. Die Darstellungen in den Figuren 1 bis 8 zeigen demzufolge nur den vorderen Abschnitt des Fahrgestells eines Schwerlastkraftwagen mit den beiden Rahmenlängsträgern 1, 2 und den hier zwei Vorderachsen 3, 4. Jede der beiden Vorderachsen 3, 4 weist einen gefedert über im einzelnen nicht dargestellte Federungs-, Lenker- und Dämpferorgane am Fahrzeugrahmen 1, 2 aufgehängten Starrachskörper 5, 6 mit daran endseitig über Achsschenkelbolzen angelenkten Radträgern 7, 8, 9, 10 und darauf gelagerten lenkbaren Rädern 11, 12, 13, 14 auf.

Erfindungsgemäß ist jede hintere Vorderachse 4 generell baugleich mit der vorderen Vorderachse 3 ausgebildet und auch gleich wie diese über die gleichen Federungs-, Lenker- und Dämpferorgane gefedert am Fahrzeugrahmen aufgehängt.

Zur Lenkung der Räder 11, 12 der vorderen Vorderachse 3 ist generell eine Servolenkeinrichtung vorgesehen, die eine hydraulische Druckölbereitstellungseinrichtung 15 und ein Lenkgetriebe 16 aufweist, das die über eine Lenksäule 17 eingeleiteten Lenkbewegungen eines Lenkrades 18 hydraulisch unterstützt über ein mehrgliedriges Lenkgestänge mit Lenkstockhebel 19, Lenkstange 20 und Lenkhebel 21 auf einen Radträger 7 oder 8 für einen entsprechenden Lenkeinschlag der Räder 11, 12 der vorderen Vorderachse 3 überträgt, wobei zur Synchronisierung des Lenkeirischlages beider Räder 11, 12 deren Radträger 7, 8 über eine Spurstange 22 miteinander gekoppelt sind.

Die Druckölbereitstellungseinrichtung 15 der Servolenkeinrichtung umfaßt einen Lenkölbehälter 23, eine Öl hieraus über eine Leitung 24 saugende und zum Lenkgetriebe 16 fördernde Lenkhilfepumpe 25 sowie eine das Lenkgetriebe 16 mit dem Lenkölbehälter 23 verbindende Rücklaufleitung 26 mit eingebautem Durchflußwächter 27.

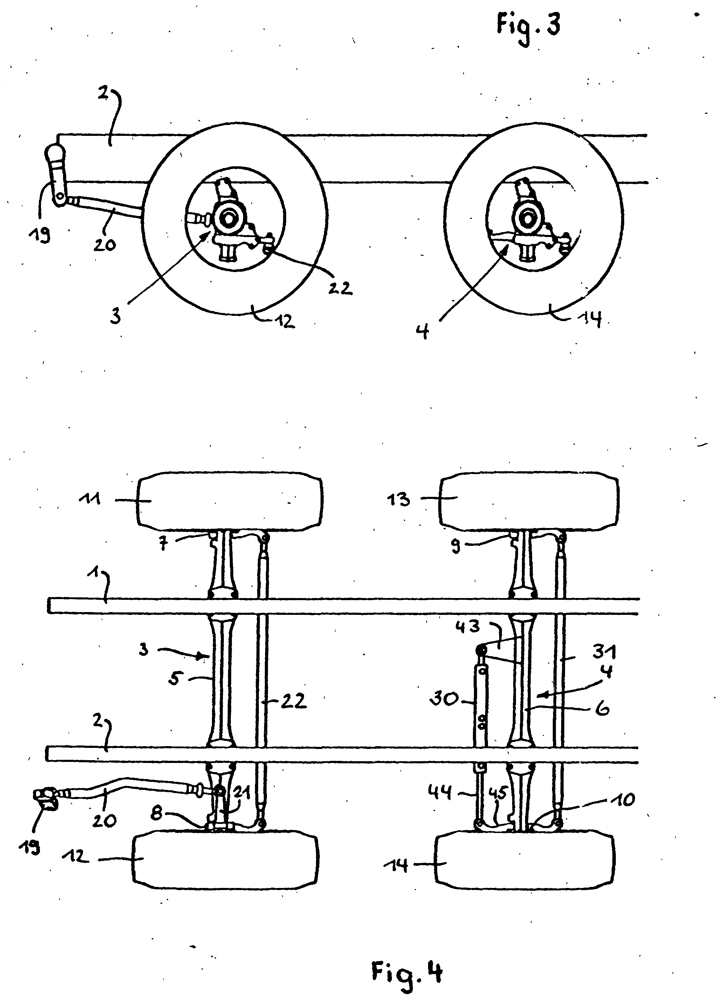

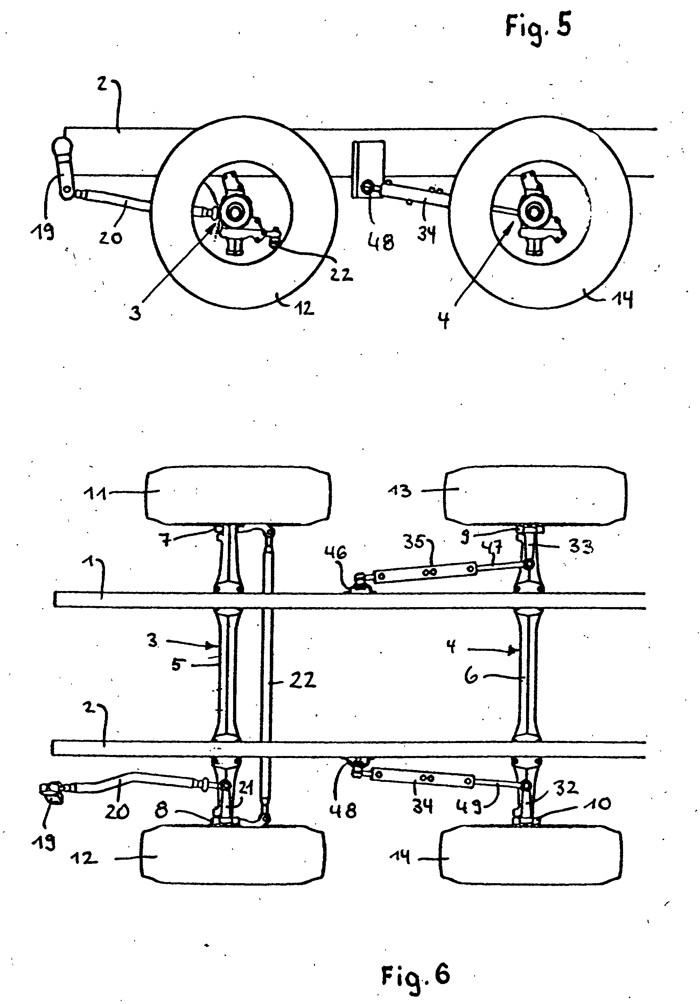

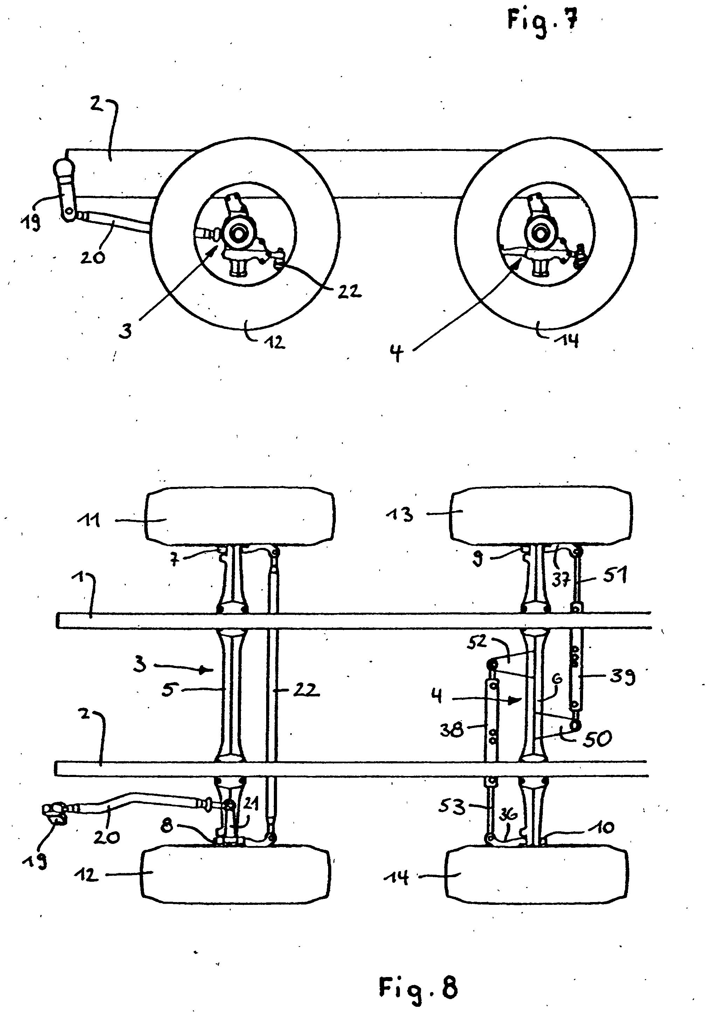

Zur Lenkung der Räder 13, 14 der hinteren Vorderachse(n) 4 sind
- bei der ersten erfindungsgemäßen Lösung - wie aus Fig. 1, 2 und 9 ersichtlich - ein auf den Radträger 9 bzw. 10 eines Rades 13 bzw. 14 einwirkender, einenendes dort und andernendes am Fahrzeugrahmen 1, 2 angelenkter Druckzylinder 28 sowie eine die Radträger 9, 10 beider Räder 13, 14 verbindende Spurstange 29,
- bei der zweiten erfindungsgemäßen Lösung - wie aus Fig. 3, 4 und 9 ersichtlich - ein auf den Radträger 9 bzw. 10 eines Rades 13 bzw. 14 einwirkender, einenendes dort und andernendes am Achskörper 6 angelenkter Druckzylinder 30 sowie eine die Radträger 9, 10 beider Räder 13, 14 verbindende Spurstange 31,
- bei der dritten erfindungsgemäßen Lösung - wie aus Fig. 5, 6 und 10 ersichtlich - zwei jeweils auf den Radträger 9 bzw. 10 eines Rades 13 bzw. 14 einwirkende, einenendes an einem radträgerfest angeordneten Lenkhebel 32, 33, andernendes am Fahrzeugrahmen 1, 2 angelenkte Druckzylinder 34, 35, und
- bei der vierten erfindungsgemäßen Lösung - wie aus Fig. 7, 8 und 10 ersichtlich - zwei jeweils auf den Radträger 9 bzw. 10 eines Rades 13 bzw. 14 einwirkende, einenendes an einem radträgerfest angeordneten Lenkhebel 36, 37, andernendes am Achskörper 6 angelenkte Druckzylinder 38, 39
vorgesehen.

Im Fall gemäß Fig. 1, 2 ist der Druckzylinder 28 vorne mit einem Lagerauge an einem rahmenfest angeordneten Lagerbock 40 und hinten mit einem am freien Ende seiner Kolbenstange 41 gegebenen Lagerauge an einem radträgerfesten Lenkhebel 42 angelenkt.

Im Fall gemäß Fig. 3, 4 ist der Druckzylinder 30 einenendes mit einem Lagerauge an einem fest am Achskörper 6 angeordneten/befestigten Lagerbock 43 und andernendes mit einem am äußeren Ende seiner Kolbenstange 44 angeordneten Lagerauge an einem fest am Radträger 9 oder 10 angeordneten Lenkhebel 45 angelenkt. Die Anschlußstelle für den Lagerbock 43 liegt - von oben betrachtet - zwischen den beiden Rahmenlängsträgern 1, 2 am Achskörper 6. Der Druckzylinder 30 selbst erstreckt sich etwa parallel zum Achskörper 6.

Im Fall gemäß Fig. 5, 6 ist der eine für die Lenkung des Rades 13 maßgebliche Druckzylinder 35 vorne mit einem Lagerauge an einem fest am Rahmenlängsträger 1 angeordneten Lagerbock 46 und mit einem am hinteren Ende seiner Kolbenstange 47 angeordneten Lagerauge am fest am Radträger 9 angeordneten Lenkhebel 33 angelenkt. Der für die Lenkung des gegenüberliegenden Rades 14 maßgebliche Druckzylinder 34 ist vorne mit einem Lagerauge an einem fest am Rahmenlängsträger 2 angeordneten Lagerbock 48 und mit einem am hinteren Ende seiner Kolbenstange 49 angeordneten Lagerauge am fest am Radträger 10 angeordneten Lenkhebel 32 angelenkt.

Im Fall gemäß Fig. 7, 8 ist der für die Lenkung des Rades 13 maßgebliche Druckzylinder 39 einenendes mit einem Lagerauge an einem fest am Achskörper 6 angeordneten/befestigten Lagerbock 50 und mit einem am freien Ende seiner Kolbenstange 51 angeordneten Lagerauge am fest am Radträger 9 angeordneten Lenkhebel 37 angelenkt. Der für die Lenkung des gegenüberliegenden Rades 14 maßgebliche Druckzylinder 38 ist ebenfalls einenendes mit einem Lagerauge an einem fest am Achskörper 6 angeordneten/befestigten Lagerbock 52 und mit einem am freien Ende seiner Kolbenstange 53 angeordneten Lagerauge am fest am Radträger 10 angeordneten Lenkhebel 36 angelenkt. Die Anschlußstellen für die beiden achskörperfesten Lagerböcke 50, 52 liegen - von oben betrachtet - zwischen den beiden Rahmenlängsträgern 1, 2, wobei der eine Lagerbock 50 am Achskörper 6 nach hinten und der andere Lagerbock 52 am Achskörper 6 nach vorne abragt und sich beide Druckzylinder 38, 39 etwa parallel zum Achskörper 6 erstrecken.

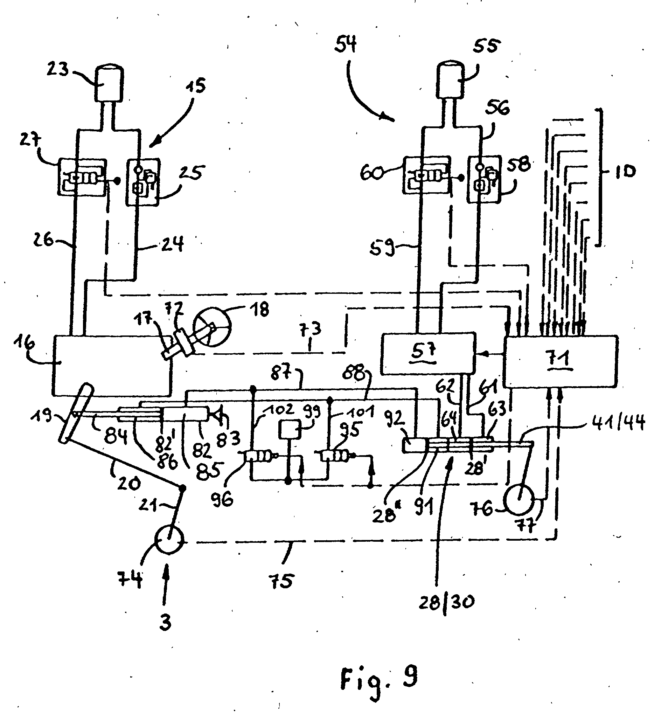

Erfindungsgemäß ist jeder Druckzylinder 28 bzw. 30 bzw. 34 und 35 bzw. 38 und 39 mit seinen beiderseits eines intern an der jeweiligen Kolbenstange 41 bzw. 44 bzw. 47, 49 bzw. 51, 53 angeordneten Stellkolbens 28', 34', 35' angreifenden Druckräumen an eine Druckölversorgungseinrichtung 54 angeschlossen. Fig. 9 zeigt das Schema für die Version gemäß Fig. 1, 2 und 3, 4, Fig. 10 das Schema für die Version gemäß Fig. 5, 6 und 7, 8. Die Druckölversorgungseinrichtung 54 weist einen Lenkölbehälter 55 und eine aus diesem Öl über eine Leitung 56 ansaugende sowie zu einem Steuerventilblock 57 fördernde Lenkhilfepumpe 58 auf. Eine Rücklaufleitung 59 mit eingebautem Dürchflußwächter 60 verbindet den Rücklaufausgang des Steuerventilblockes 57 mit dem Lenkölbehälter 55. Die das Lenköl zuführende Leitung 56 ist am Eingang des Steuerventilblockes 57 angeschlossen. Dessen im Fall gemäß von Fig. 1, 2 und 3, 4 zwei Steuerausgänge sind über zwei Steuerleitungen 61, 62 mit den beiden Steuerdruckräumen 63, 64 des Druckzylinders 28 bzw. 30 verbunden. Im Fall gemäß Fig. 5, 6 und 7, 8 besitzt der auch intern anders gestaltete Steuerventilblock 57 zwei weitere, also insgesamt vier Steuerausgänge, wobei die beiden ersten Steuerausgänge wie im Fall gemäß Fig. 1, 2 und 3, 4 über Steuerleitungen 61, 62 mit den beiden Steuerdruckräumen 65, 66 des Druckzylinders 34, 38 und die beiden weiteren Steuerausgänge über Steuerleitungen 67, 68 mit den beiden Steuerdruckräumen 69, 70 im Druckzylinder 35, 39 verbunden sind.

Einem weiteren erfindungsgemäßen Merkmal entsprechend ist ein elektronischer Rechner 71 als unter anderem für die Lenkung der Räder 13, 14 der hinteren Vorderachse(n) 4 maßgebliches Regel- und Steuerorgan vorgesehen. Dieser Rechner 71 erhält eine Vielzahl von fahrbetriebsspezifischen Ist-Daten ID von entsprechenden Sensoren oder Meßstellen über entsprechende Signalleitungen gemeldet. Außerdem erhält er für die Lenkung der Vorderachsen 3, 4 maßgebliche Signale zugeführt, so von einem z. B. an der Lenksäule 17 angeordneten Sensor 72 den vom Fahrer durch Betätigung des Lenkrades 18 vorgegebenen und per Signalleitung 73 übertragenen Soll-Lenkwinkel und von einem an der vorderen Vorderachse 3 an geeigneter Stelle angeordneten Sensor 74 über Signalleitung 75 übertragenen Ist-Wert des Lenkeinschlages der Räder 11, 12. Der Rechner 71 errechnet auf der Basis dieser Ist-Werte anhand eingespeicherter Daten und Kennwerte den Lenkeinschlag der Räder 13, 14 der hinteren Vorderachse(n) 4 und gibt dann entsprechende Regel- und Steuerbefehle an die Druckölversorgungseinrichtung 54 für eine entsprechend nachführende Betätigung des Druckzylinders 28 bzw. 30 bzw. der Druckzylinder 34, 35 bzw. 38, 39 aus. Von einem an geeigneter Stelle jeder hinteren Vorderachse 4 angeordneten Sensor 76 über Signalleitung 77 (Fig. 1, 2; 3, 4 und 9) bzw. zwei Sensoren 78, 79 über Signalleitungen 80, 81 (Fig. 5, 6; 7, 8 und 10) erhält der Rechner 71 den Ist-Wert des Lenkeinschlages der Räder 13, 14 der hinteren Vorderachse(n) 4 gemeldet, so daß durch einen rechnerischen Soll-Ist-Vergleich der/die Druckzylinder 28, 30; 34, 35; 38, 39 so betätigbar sind, bis sich die korrekte Radeinstellung an jeder hinteren Vorderachse 4 ergibt.

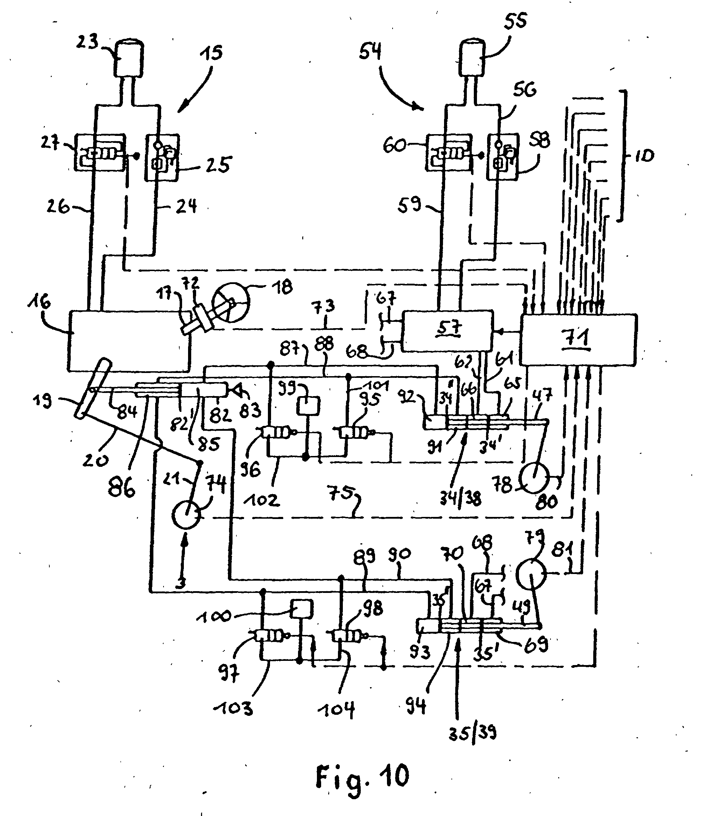

Um etwaigen Störungen in der Druckölversorgungseinrichtung 54 vorzubeugen, die z. B. durch Leitungsbrüche oder Leckagen hervorgerufen werden können, ist entsprechend einem weiteren Merkmal der Erfindungen eine Sicherheitseinrichtung vorgesehen. Diese weist als Hauptorgan einen Ersatz-Druckzylinder 82 auf, der einerseits am Fahrzeugrahmen 1, 2, andererseits an einem Teil des Lenkgestänges angelenkt und von diesem synchron zu seinen Lenkbewegungen betätigbar ist. Im dargestellten Beispiel ist der Ersatz-Druckzylinder 82 (nur in Fig. 9, 10 dargestellt, aus Übersichtlichkeitsgründen in Fig. 1 bis 8 nicht) an seinem hinteren Ende mit einem Lagerauge an einem rahmenfesten Lagerbock 83 und mit einem am vorderen Ende seiner Kolbenstange 84 angeordneten Lagerauge am Lenkstockhebel 19 angelenkt und im wesentlichen parallel zum Fahrzeugrahmen 1, 2 verlaufend angeordnet.

Intern des Ersatz-Druckzylinders 82 ist beiderseits eines mit der Kolbenstange 84 verbundenen Stellkolbens 82' je ein Druckraum 85, 86 gegeben. Jeder dieser beiden Druckräume 85, 86 ist über eine Druckleitung 87, 88 (Fig. 1, 2, 3, 4 und 9) bzw. 87, 88 und 89, 90 (Fig. 5, 6, 7, 8 und 10) mit einem Sicherheitsdruckraum 91, 92 (Fig. 9) bzw. 91, 92 und 93, 94 (Fig. 10) im Druckzylinder 28 bzw. 30 bzw. in den Druckzylindern 34, 35 bzw. 38, 39 verbunden, der bzw. die diesseits und jenseits eines an der Kolbenstange 41 bzw. 44 bzw. 47 und 49 angeordneten Stellkolbens 28" bzw. 34" und 35" gegeben sind.

Die mit Hydrauliköl gefüllten Druckräume und diese verbindende Druckleitungen 87, 88 (Fig. 9) bzw. 87, 88 und 89, 90 (Fig. 10) stehen über durch Befehle des Rechners 71 gesteuerte Absperr-/Durchlaß-Magnetventile 95, 96 (Fig. 9) bzw. 95, 96 und 97, 98 (Fig. 10) im Normalfall mit einem Ausgleichsbehälter 99 (Fig. 9) bzw. zwei Ausgleichsbehältern 99, 100 (Fig. 10) in Kommunikation. Vorzugsweise sind die Absperr-/Durchlaß-Magnetventile 95, 96 und 97, 98 jeweils in eine von der jeweiligen Druckleitung 87, 88 und 89, 90 abgehende sowie mit dem Ausgleichsbehälter 99, 100 kommunizierende Absteuerleitung 101, 102 and 103, 104 eingebaut Sobald vom Rechner 71 Unregelmäßigkeiten im Betrieb der Druckölversorgungseinrichtung 54 erkannt werden, veranlaßt dieser in einem solchen Störfall die Umschaltung der Absperr-/Durchlaß-Magnetventile 95, 96, 97, 98 in deren Absperrstellung, worauf dann die Druckleitungen 87, 88 und 89, 90 geschlossen, also hydraulisch verblockt sind und die vom Lenkgestänge auf die Räder 11, 12 der vorderen Vorderachse 3 übertragenen Lenkbewegungen synchron vom Ersatz-Druckzylinder 82 der Sicherheitseinrichtung auf den bzw. die Druckzylinder 28, 30 bzw. 34, 35 bzw. 38, 39 für entsprechend sichere Lenkung der Räder 13, 14 der hinteren Vorderachse(n) 4 übertragbar sind. Im dargestellten Beispiel wird die Lenkbewegung des Lenkstockhebels 19 unmittelbar mechanisch auf die Kolbenstange 84 des Ersatz-Druckzylinders 82 und dessen Bewegung bei hydraulischer Verblockung der Druckleitungen 87, 88 und/oder 89, 90 unmittelbar auf die Kolbenstangen der Druckzylinder 28, 30, 34, 35, 38, 39 übertragen.

## Patentansprüche

1. Schwerlastkraftwagen mit wenigstens zwei baugleich ausgebildeten Vorderachsen mit gefedert am Fahrzeugrahmen aufgehängten Starrachskörpern und daran angelenkten Radträgern mit darauf gelagerten lenkbaren Rädern, ferner mit einer auf die Räder der vorderen Vorderachse wirkenden Servolenkeinrichtung mit einem Lenkgetriebe und einem auf einen Radträger wirkenden mehrteiligen Lenkgestänge sowie einer die beiden Radträger verbindenden Spurstange, und mit einer Steuereinrichtung zur Lenkung der Räder der hinteren Vorderachse(n), **gekennzeichnet durch** die Kombination folgender Merkmale, nämlich
a) jede hintere Vorderachse (4) ist ebenso wie die baugleiche vordere Vorderachse (3) einzeln **durch** gleiche Federungs-, Dämpfer- und Lenkerorgane am Fahrzeugrahmen (1, 2) angeschlossen,
b) zur Lenkung der Räder (13, 14) jeder hinteren Vorderachse (4) sind ein auf den Radträger (9 bzw. 10) eines Rades (13, 14) einwirkender, einenendes dort und andernendes am Fahrzeugrahmen (1, 2) angelenkter Druckzylinder (28) sowie eine die Radträger (9, 10) beider Räder (13, 14) verbindende Spurstange (29) vorgesehen,
c) der Druckzylinder (28) jeder hinteren Vorderachse (4) ist mit seinen beiderseits eines Stellkolbens (28') angreifenden Druckräumen (63, 64) an einer Druckölversorgungseinrichtung (54) angeschlossen,
d) ein elektronischer Rechner (71) erhält sensorisch erfasste Lenkwinkel-Istwerte der vorderen Vorderachse (3) zugeführt, errechnet anhand eingespeicherter Daten/Kennwerte den Lenkeinschlag der Räder (13, 14) der hinteren Vorderachse(n) (4) und gibt dann Regel- und Steuerbefehle an die Druckölversorgungseinrichtung (54) für eine entsprechende Betätigung des Druckzylinders (28) jeder hinteren Vorderachse (4) aus,
e) es ist eine Sicherheitseinrichtung mit einem hydraulischen Ersatz-Druckzylinder (82) vorgesehen, der einerseits am Fahrzeugrahmen (1, 2), andererseits an einem Teil (19) des Lenkgestänges der vorderen Vorderachse (3) angelenkt und von diesem synchron zu seinen Lenkbewegungen betätigbar ist, außerdem mit seinen beiderseits eines Stellkolbens (82') gegebenen Druckräumen (85, 86) mit Sicherheits-druckräumen (91, 92) im Druckzylinder (28) der hinteren Vorderachse(n) (4) verbunden ist, über Druckleitungen (87, 88), die über **durch** Befehle des Rechners (71) gesteuerte Absperr-/ Durchlass-Magnetventile (95, 96) im Normalfall zu einen Ausgleichsbehälter (99) hin offen, im Störfall aber geschlossen und dann die Lenkbewegungen der Räder (11, 12) der vorderen Vorderachse (3) synchron vom Ersatz-Druckzylinder (82) der Sicherheitseinrichtung auf den Druckzylinder (28) für eine Lenkung der Räder (13, 14) jeder hinteren Vorderachse (4) übertragbar sind.

2. Schwerlastkraftwagen mit wenigstens zwei baugleich ausgebildeten Vorderachsen mit gefedert am Fahrzeugrahmen aufgehängten Starrachskörpern und daran angelenkten Radträgern mit darauf gelagerten lenkbaren Rädern, ferner mit einer auf die Räder der vorderen Vorderachse wirkenden Servolenkeinrichtung mit einem Lenkgetriebe und einem auf einen Radträger wirkenden mehrteiligen Lenkgestänge sowie einer die beiden Radträger verbindenden Spurstange, und mit einer Steuereinrichtung zur Lenkung der Räder der hinteren Vorderachse(n), **gekennzeichnet durch** die Kombination folgender Merkmale, nämlich
a) jede hintere Vorderachse (4) ist ebenso wie die baugleiche vordere Vorderachse (3) einzeln **durch** gleiche Federungs-, Dämpfer- und Lenkerorgane am Fahrzeugrahmen (1, 2) angeschlossen,
b) zur Lenkung der Räder (13, 14) jeder hinteren Vorderachse (4) sind ein auf den Radträger (9, 10) eines Rades (13, 14) einwirkender, einenendes dort und andernendes am Achskörper (6) angelenkter Druckzylinder (30) sowie eine die Radträger (9, 10) beider Räder (13, 14) verbindende Spurstange (31) vorgesehen,
c) der Druckzylinder (30) jeder hinteren Vorderachse (4) ist mit seinen beiderseits eines Stellkolbens (28') angreifenden Druckräumen (63, 64) an einer Druckölversorgungseinrichtung (54) angeschlossen,
d) ein elektronischer Rechner (71) erhält sensorisch erfasste Lenkwinkel-lstwerte der vorderen Vorderachse (3) zugeführt, errechnet anhand eingespeicherter Daten/Kennwerte den Lenkeinschlag der Räder (13, 14) der hinteren Vorderachse(n) (4) und gibt dann Regel- und Steuerbefehle an die Druckölversorgungseinrichtung (54) für eine entsprechende Betätigung des Druckzylinders (30) jeder hinteren Vorderachse (4) aus,
e) es ist eine Sicherheitseinrichtung mit einem hydraulischen Ersatz-Druckzylinder (82) vorgesehen, der einerseits am Fahrzeugrahmen (1, 2), andererseits an einem Teil (19) des Lenkgestänges der vorderen Vorderachse (3) angelenkt und von diesem synchron zu seinen Lenkbewegungen betätigbar ist, außerdem mit seinen beiderseits eines Stellkolbens (82') gegebenen Druckräumen (85, 86) mit Sicherheits-druckräumen (91, 92) im Druckzylinder (30) der hinteren Vorderachse(n) (4) verbunden ist, über Druckleitungen (87, 88), die über **durch** Befehle des Rechners (71) gesteuerte Absperr-/ Durchlass-Magnetventile (95, 96) im Normalfall zu einen Ausgleichsbehälter (99) hin offen, im Störfall aber geschlossen und dann die Lenkbewegungen der Räder (11, 12) der vorderen Vorderachse (3) synchron vom Ersatz-Druckzylinder (82) der Sicherheitseinrichtung auf den Druckzylinder (30) für eine Lenkung der Räder (13, 14) jeder hinteren Vorderachse (4) übertragbar sind.

3. Schwerlastkraftwagen mit wenigstens zwei baugleich ausgebildeten Vorderachsen mit gefedert am Fahrzeugrahmen aufgehängten Starrachskörpern und daran angelenkten Radträgern mit darauf gelagerten lenkbaren Rädern, ferner mit einer auf die Räder der vorderen Vorderachse wirkenden Servolenkeinrichtung mit einem Lenkgetriebe und einem auf einen Radträger wirkenden mehrteiligen Lenkgestänge sowie einer die beiden Radträger verbindenden Spurstange, und mit einer Steuereinrichtung zur Lenkung der Räder der hinteren Vorderachse(n), **gekennzeichnet durch** die Kombination folgender Merkmale, nämlich
a) jede hintere Vorderachse (4) ist ebenso wie die baugleiche vordere Vorderachse (3) einzeln **durch** gleiche Federungs-, Dämpfer- und Lenkerorgane am Fahrzeugrahmen (1, 2) angeschlossen,
b) zur Lenkung der beiden Räder (13, 14) jeder hinteren Vorderachse (4) sind zwei, jeweils auf den Radträger (9, 10) eines Rades einwirkende, einenendes dort und andernendes am Fahrzeugrahmen (1, 2) angelenkte Druckzylinder (34, 35) vorgesehen,
c) die Druckzylinder (34, 35) jeder hinteren Vorderachse (4) sind mit ihren jeweils beiderseits eines Stellkolbens (34', 35') angreifenden Druckräumen (65, 66; 69, 70) an einer Druckölversorgungseinrichtung (54) angeschlossen,
d) ein elektronischer Rechner (71) erhält sensorisch erfasste Lenkwinkel-lstwerte der vorderen Vorderachse (3) zugeführt, errechnet anhand eingespeicherter Daten/Kennwerte den Lenkeinschlag der Räder (13, 14) der hinteren Vorderachse(n) (4) und gibt dann Regel- und Steuerbefehle an die Druckölversorgungseinrichtung (54) für eine entsprechende Betätigung der Druckzylinder (34, 35) jeder hinteren Vorderachse (4) aus,
e) es ist eine Sicherheitseinrichtung mit einem hydraulischen Ersatz-Druckzylinder (82) vorgesehen, der einerseits am Fahrzeugrahmen (1, 2), andererseits an einem Teil (19) des Lenkgestänges der vorderen Vorderachse (3) angelenkt und synchron zu seinen Lenkbewegungen betätigbar ist, außerdem mit seinen beiderseits eines Stellkolbens (82') gegebenen Druckräumen (85, 86) mit Sicherheitsdruckräumen (91, 92; 93, 94) in den Druckzylindern (34, 35) der hinteren Vorderachse(n) (4) verbunden ist, über jeweils zwei Druckleitungen (87, 88; 89, 90), die über **durch** Befehl des Rechners (71) gesteuerte Absperr-/Durchlass-Magnetventile (95, 96; 97, 98) im Normalfall zu einem Ausgleichsbehälter (99, 100) hin offen, im Störfall aber geschlossen und dann die Lenkbewegungen der Räder (11, 12) der vorderen Vorderachse (3) synchron vom Ersatz-Druckzylinder (82) der Sicherheitseinrichtung auf die Druckzylinder (34, 35) jeder hinteren Vorderachse (4) für eine Lenkung von deren Rädern (13, 14) übertragbar sind.

4. Schwerlastkraftwagen mit wenigstens zwei baugleich ausgebildeten Vorderachsen mit gefedert am Fahrzeugrahmen aufgehängten Starrachskörpern und daran angelenkten Radträgern mit darauf gelagerten lenkbaren Rädern, ferner mit einer auf die Räder der vorderen Vorderachse wirkenden Servolenkeinrichtung mit einem Lenkgetriebe und einem auf einen Radträger wirkenden mehrteiligen Lenkgestänge sowie einer die beiden Radträger verbindenden Spurstange, und mit einer Steuereinrichtung zur Lenkung der Räder der hinteren Vorderachse(n), **gekennzeichnet durch** die Kombination folgender Merkmale, nämlich
a) jede hintere Vorderachse (4) ist ebenso wie die baugleiche vordere Vorderachse (3) einzeln **durch** gleiche Federungs-, Dämpfer- und Lenkerorgane am Fahrzeugrahmen (1, 2) angeschlossen,
b) zur Lenkung der beiden Räder (13, 14) jeder hinteren Vorderachse (4) sind zwei, jeweils auf den Radträger (9, 10) eines Rades einwirkende, einenendes dort und andernendes am Achskörper (6) angelenkte Druckzylinder (38, 39) vorgesehen,
c) die Druckzylinder (38, 39) jeder hinteren Vorderachse (4) sind mit ihren jeweils beiderseits eines Stellkolbens (34', 35') angreifenden Druckräumen (65, 66; 69, 70) an einer Druckölversorgungseinrichtung (54) angeschlossen,
d) ein elektronischer Rechner (71) erhält sensorisch erfasste Lenkwinkel-Istwerte der vorderen Vorderachse (3) zugeführt, errechnet anhand eingespeicherter Daten/Kennwerte den Lenkeinschlag der Räder (13, 14) der hinteren Vorderachse(n) (4) und gibt dann Regel- und Steuerbefehle an die Druckölversorgungseinrichtung (54) für eine entsprechende Betätigung der Druckzylinder (38, 39) jeder hinteren Vorderachse (4) aus,
e) es ist eine Sicherheitseinrichtung mit einem hydraulischen Ersatz-Druckzylinder (82) vorgesehen, der einerseits am Fahrzeugrahmen (1, 2), andererseits an einem Teil (19) des Lenkgestänges der vorderen Vorderachse (3) angelenkt und synchron zu seinen Lenkbewegungen betätigbar ist, außerdem mit seinen beiderseits eines Stellkolbens (82') gegebenen Druckräumen (85, 86) mit Sicherheitsdruckräumen (91, 92; 93, 94) in den Druckzylindern (38, 39) der hinteren Vorderachse(n) (4) verbunden ist, über jeweils zwei Druckleitungen (87, 88; 89, 90), die über **durch** Befehl des Rechners (71) gesteuerte Absperr-/Durchlass-Magnetventile (95, 96; 97, 98) im Normalfall zu einem Ausgleichsbehälter (99, 100) hin offen, im Störfall aber geschlossen und dann die Lenkbewegungen der Räder (11, 12) der vorderen Vorderachse (3) synchron vom Ersatz-Druckzylinder (82) der Sicherheitseinrichtung auf die Druckzylinder (38, 39) jeder hinteren Vorderachse (4) für eine Lenkung von deren Rädern (13, 14) übertragbar sind.

5. Schwerlastkraftwagen nach einem der Ansprüche 1 bis 4, **dadurch gekennzeichnet, dass** dem Rechner (71) von einem Sensor (72) an der Lenksäule (17) des Lenkrades (18) über Signalleitung (73) der Soll-Lenkeinschlagswinkel der Räder (11, 12) der vorderen Vorderachse (3) und von je einem an der vorderen und jeder hinteren Vorderachse (3 bzw. 4) an geeigneter Stelle angeordneten Sensor (74, 76, 78, 79) über Signalleitungen (75, 77, 80, 81) der Ist-Lenkeinschlagwinkel aller Räder (11, 12, 13, 14) für einen entsprechenden Soll-Ist-Vergleich zugeführt werden.

6. Schwerlastkraftwagen nach einem der Ansprüche 1 bis 4, **dadurch gekennzeichnet, dass** die zur Betätigung der Druckzylinder (28, 30, 34, 35, 38, 39) dienende Druckölversorgungseinrichtung (54) einen Lenkölbehälter (55) sowie eine Öl aus diesem über eine Leitung (56) saugende und einem Steuerventilblock (57) zuführende Lenkhilfepumpe (58) aufweist, wobei am Steuerventilblock (57) an dessen einem Eingang die Druckmitteleinspeisung erfolgt, an dessen Steuerausgängen über Steuerleitungen (61, 62; 67, 68) die Steuerdruckräume (63, 64; 69, 70) des bzw. der Druckzylinder (28, 30, 34, 35, 38, 39) und am Rücklaufausgang eine zum Lenkölbehälter (55) hinführende Rücklaufleitung (59) mit eingebautem Durchflusswächter (60) angeschlossen sind.

7. Schwerlastkraftwagen nach einem der Ansprüche 1 bis 4, **dadurch gekennzeichnet, dass** der Ersatz-Druckzylinder (82) der Sicherheitseinrichtung vorne mit seiner Kolbenstange (84) am Lenkstockhebel (19) und hinten an einem rahmenfesten Lagerbock (83) angelenkt ist und im wesentlichen parallel zum Fahrzeugrahmen (1, 2) verläuft.

8. Schwerlastkraftwagen nach einem der Ansprüche 1 bis 4, **dadurch gekennzeichnet, dass** die Sicherheits-Druckräume (91, 92; 93, 94) intern eines Druckzylinders (28, 30; 34, 35, 38, 39) beiderseits eines ebenfalls an der Kolbenstange (41 bzw. 44 bzw. 47, 49) angeordneten Stellkolbens (28"; 34"; 35") gegeben sind.

9. Schwerlastkraftwagen nach einem der Ansprüche 1 bis 4, **dadurch gekennzeichnet, dass** von den die beiden Druckräume (85, 86) des Ersatz-Druckzylinders (82) mit den beiden Sicherheits-Druckräumen (91, 92; 93, 94) eines Druckzylinders (28, 30, 34, 35, 38, 39) verbindenden Druckleitungen (87, 88; 89, 90) jeweils eine Absteuerleitung (101, 102; 103, 104), in die ein Absperr-/Durchlass-Magnetventil (95, 96; 97, 98) eingebaut ist, zu einem Ausgleichsbehälter (99, 100) hinführt.

## Claims

1. Heavy-duty truck with at least two constructionally identical front axles with rigid axle bodies fitted to the vehicle frame by means of springs and wheel carriers located on said axle bodies and provided with steerably mounted wheels, furthermore with a power steering device acting on the wheels on the first front axle and provided with a steering gear and with a multi-part steering linkage acting on a wheel carrier and with a track rod linking the two wheel carriers as well as with a control unit for steering the wheels on the rear front axle(s), **characterised by** the combination of the following features, namely
a) that each rear front axle (4), like the constructionally identical first front axle (3), is individually connected up to the vehicle frame (1, 2) by means of identical suspension, damping and steering organs,
b) that a pressure cylinder (28) acting on the wheel carrier (9 and 10) of a wheel (13, 14) and located on said wheel carrier (9 and 10) with its one end and on the vehicle frame (1, 2) with the other and a track rod (29) linking the wheel carriers (9, 10) of the two wheels (13, 14) are provided for steering the wheels (13, 14) on each and every rear front axle (4),
c) that with its pressure chambers (63, 64) acting from the two ends of a setting piston (28') the pressure cylinder (28) on each rear front axle (4) is connected up to a pressure oil supply device (54),
d) that an electronic control unit (71) ascertains actual steering-angle values recorded by sensors for the first front axle (3), calculates the steering angles for the wheels (13, 14) on the rear front axle(s) (4) with the aid of stored data/characteristic values and then sends control commands to the pressure-oil supply device (54) for a corresponding actuation of the pressure cylinder (28) on each and every rear front axle (4),
e) that a safety device with a hydraulic spare pressure cylinder (82) is provided, which cylinder (82) is located on the vehicle frame (1, 2) with its one end and on a part (19) of the steering linkage of the first front axle (3) with the other and can be actuated synchronously to its steering movements by said part (19) of the steering linkage, that in addition said hydraulic spare pressure cylinder (82) with its pressure chambers (85, 86) provided at both ends of a setting piston (82') is linked with safety pressure chambers (91, 92) in the pressure cylinder (28) on the rear front axle(s) (4) by means of pressure lines (87, 88) which run to an expansion tank (99) and are kept open in normal operation via shut-off and passage valves (95, 96) controlled by commands from the control unit (71) but are closed in the event of a fault and that then the steering movements of the wheels (11, 12) on the first front axle (3) can be synchronously transmitted to the pressure cylinder (28) from the spare pressure cylinder (82) of the safety device for steering the wheels (13, 14) on each rear front axle (4).

2. Heavy-duty truck with at least two constructionally identical front axles with rigid axle bodies fitted to the vehicle frame by means of springs and wheel carriers located on said axle bodies and provided with steerably mounted wheels, furthermore with a power steering device acting on the wheels on the first front axle and provided with a steering gear and with a multi-part steering linkage acting on a wheel carrier and with a track rod linking the two wheel carriers as well as with a control unit for steering the wheels-on the rear front axle(s), **characterised by** the combination of the following features, namely
a) that each rear front axle (4), like the constructionally identical first front axle (3), is individually connected up to the vehicle frame (1, 2) by means of identical suspension, damping and steering organs,
b) that a pressure cylinder (30) acting on the wheel carrier (9 and 10) of a wheel (13, 14) and located on said wheel carrier (9 and 10) with its one end and on the axle body (6) with the other and a track rod (31) linking the wheel carriers (9, 10) of the two wheels (13, 14) are provided for steering the wheels (13, 14) on each and every rear front axle (4),
c) that with its pressure chambers (63, 64) acting from the two ends of a setting piston (28') the pressure cylinder (30) on each rear front axle (4) is connected up to a pressure oil supply device (54),
d) that an electronic control unit (71) ascertains actual steering-angle values recorded by sensors for the first front axle (3), calculates the steering angles for the wheels (13, 14) on the rear front axle(s) (4) with the aid of stored data/characteristic values and then sends control commands to the pressure-oil supply device (54) for a corresponding actuation of the pressure cylinder (30) on each and every rear front axle (4),
e) that a safety device with a hydraulic spare pressure cylinder (82) is provided, which cylinder (82) is located on the vehicle frame (1, 2) with its one end and on a part (19) of the steering linkage of the first front axle (3) with the other and can be actuated synchronously to its steering movements by said part (19) of the steering linkage, that in addition said hydraulic spare pressure cylinder (82) with its pressure chambers (85, 86) provided at both ends of a setting piston (82') is linked with safety pressure chambers (91, 92) in the pressure cylinder (30) on the rear front axle(s) (4) by means of pressure lines (87, 88) which run to an expansion tank (99) and are kept open in normal operation via shut-off and passage valves (95, 96) controlled by commands from the control unit (71) but are closed in the event of a fault and that then the steering movements of the wheels (11, 12) on the first front axle (3) can be synchronously transmitted to the pressure cylinder (30) from the spare pressure cylinder (82) of the safety device for steering the wheels (13, 14) on each rear front axle (4).

3. Heavy-duty truck with at least two constructionally identical front axles with rigid axle bodies fitted to the vehicle frame by means of springs and wheel carriers located on said axle bodies and provided with steerably mounted wheels, furthermore with a power steering device acting on the wheels on the first front axle and provided with a steering gear and with a multi-part steering linkage acting on a wheel carrier and with a track rod linking the two wheel carriers as well as with a control unit for steering the wheels on the rear front axle(s), **characterised by** the combination of the following features, namely
a) that each rear front axle (4), like the constructionally identical first front axle (3), is connected up to the vehicle frame (1, 2) by means of identical suspension, damping and steering organs,
b) that two pressure cylinders (34, 35) acting on the wheel carrier (9, 10) of a wheel and located on said wheel carrier (9 and 10) with their one end and on the vehicle frame (1, 2) with the other are provided for steering the two wheels (13, 14) on each and every rear front axle (4),
c) that with their respective pressure chambers (65, 66, 69, 70) acting from the two ends of a setting piston (34', 35') the pressure cylinders (34, 35) on each rear front axle (4) are connected up to a pressure oil supply device (54),
d) that an electronic control unit (71) ascertains actual steering-angle values recorded by sensors for the first front axle (3), calculates the steering angles for the wheels (13, 14) on the rear front axle(s) (4) with the aid of stored data/characteristic values and then sends control commands to the pressure-oil supply device (54) for a corresponding actuation of the pressure cylinders (34, 35) on each and every rear front axle (4),
e) that a safety device with a hydraulic spare pressure cylinder (82) is provided, which cylinder (82) is located on the vehicle frame (1, 2) with its one end and on a part (19) of the steering linkage of the first front axle (3) with the other and can be actuated synchronously to its steering movements, that in addition said hydraulic spare pressure cylinder (82) with its pressure chambers (85, 86) provided at both ends of a setting piston (82') is linked with safety pressure chambers (91, 92; 93, 94) in the pressure cylinders (34, 35) on the rear front axle(s) (4) by means of two pairs of pressure lines (87, 88; 89, 90) which run to an expansion tank (99, 100) and are kept open in normal operation via shut-off and passage valves (95, 96; 97, 98) controlled by commands from the control unit (71) but are closed in the event of a fault and that then the steering movements of the wheels (11, 12) on the first front axle (3) can be synchronously transmitted to the pressure cylinders (34, 35) on each rear front axle (4) by the spare pressure cylinder (82) of the safety device for steering the wheels (13, 14) on each rear axle (4).

4. Heavy-duty truck with at least two constructionally identical front axles with rigid axle bodies fitted to the vehicle frame by means of springs and wheel carriers located on said axle bodies and provided with steerably mounted wheels, furthermore with a power steering device acting on the wheels on the first front axle and provided with a steering gear and with a multi-part steering linkage acting on a wheel carrier and with a track rod linking the two wheel carriers as well as with a control unit for steering the wheels on the rear front axle(s), **characterised by** the combination of the following features, namely
a) that each rear front axle (4), like the constructionally identical first front axle (3), is connected up to the vehicle frame (1, 2) by means of identical suspension, damping and steering organs,
b) that two pressure cylinders (38, 39) acting on the wheel carrier (9 and 10) of a wheel (13, 14) and located on said wheel carrier (9 and 10) with its one end and on the axle body (6) with the other are provided for steering the wheels (13, 14) on each and every rear front axle (4),
c) that with its pressure chambers (65, 66; 69, 70) acting from the two ends of a setting piston (34', 35') the pressure cylinders (38, 39) on each rear front axle (4) are connected up to a pressure oil supply device (54),
d) that an electronic control unit (71) ascertains actual steering-angle values recorded by sensors for the first front axle (3), calculates the steering angles for the wheels (13, 14) on the rear front axle(s) (4) with the aid of stored data/characteristic values and then sends control commands to the pressure-oil supply device (54) for a corresponding actuation of the pressure cylinders (38, 39) on each and every rear front axle (4),
e) that a safety device with a hydraulic spare pressure cylinder (82) is provided, which cylinder (82) is located on the vehicle frame (1, 2) with its one end and on a part (19) of the steering linkage of the first front axle (3) with the other and can be actuated synchronously to its steering movements, that in addition said hydraulic spare pressure cylinder (82) with its pressure chambers (85, 86) provided at both ends of a setting piston (82') is linked with safety pressure chambers (91, 92; 93, 94) in the pressure cylinders (38, 39) on the rear front axle(s) (4) by means of two pair of pressure lines (87, 88; 89, 90) each which run to an expansion tank (99, 100) and are kept open in normal operation via shut-off and passage valves (95, 96; 97, 98) controlled by commands from the control unit (71) but are closed in the event of a fault and that then the steering movements of the wheels (11, 12) on the first front axle (3) can be synchronously transmitted to the pressure cylinders (38, 39) on each rear axle (4) from the spare pressure cylinder (82) of the safety device for steering the wheels (13, 14) on each rear axle (4).

5. Heavy-duty truck according to one of the Claims 1 to 4, **characterised in that** the control unit (71) is supplied via a signal line (73) with the set-point steering angle for the wheels (11, 12) on the first front axle (3) by a sensor (72) on the steering column (17) of the steering wheel (18) and via signal lines (75, 77, 80, 81) with the actual steering-angle value of all wheels (11, 12, 13, 14) by the sensors (74, 76, 78, 79), which are each arranged at a suitable point on the first axle and on each rear front axle (3 and 4), for a corresponding comparison of set-point and actual values.

6. Heavy-duty truck according to one of the Claims 1 to 4, **characterised in that** the pressure oil supply device (54) for actuating the pressure cylinders (28, 30, 34, 35, 38, 39) is equipped with a steering oil reservoir (55) and a steering booster pump (58) sucking oil from said tank (55) via a line (56) and supplying it to a control valve block (57), at whose one input pressure medium is supplied, at whose control outputs the control pressure chambers (63, 64; 69, 70) of the pressure cylinder(s) (28, 30, 34, 35, 38, 39) and at whose return output a return line (59) running to the steering oil reservoir (55) and provided with an in-built flow monitor (60) are connected via control lines (61, 62, 67, 68).

7. Heavy-duty truck according to one of the Claims 1 to 4, **characterised in that** at its front end the spare pressure cylinder (82) of the safety device is located with its piston rod (84) on the drop arm (19) and, at its rear end, on a bearing block (83) firmly fitted to the frame and runs basically parallel to the vehicle frame (1, 2).

8. Heavy-duty truck according to one of the Claims 1 to 4, **characterised in that** the safety pressure chambers (91, 92; 93, 94) of a pressure cylinder (28, 30; 34, 35, 38, 39) are internally provided at both ends of a setting piston (28"; 34";35") also arranged on the piston rod (41 and 44 and 47, 49).

9. Heavy-duty truck according to one of the Claims 1 to 4, **characterised in that** from each of the two pressure lines (87, 88; 89, 90) connecting the two pressure chambers (85, 86) of the spare pressure cylinder (82) with the two safety pressure chambers (91, 92; 93, 94) of a pressure cylinder (28, 30, 34, 35, 38, 39) one output control line (101, 102; 103, 104), in which a shutoff/passage solenoid valve (95, 96; 97, 98) is installed, runs to an expansion tank (99, 100).

## Revendications

1. Camion pour fort tonnage comportant au moins deux essieux avant de même construction dont les corps rigides sont suspendus par ressort au châssis du véhicule et des supports de roue articulés sur les essieux avec des roues directrices montées sur les supports, et de plus une installation de direction assistée agissant sur les roues de l'essieu avant amont, par une transmission de direction et une tringlerie de direction en plusieurs parties agissant sur un support de roué ainsi qu'une barre de couplage reliant les deux supports de roue et une installation de commande pour guider les roues du ou des essieux avant aval,
**caractérisé par**
la combinaison des caractéristiques suivantes :
a) chaque essieu avant (4) aval est relié comme l'essieu avant (3), amont, de même construction, séparément par les mêmes organes de suspension d'amortissement et de direction au châssis (1, 2), du véhicule,
b) pour guider les roues (13, 14) de chaque essieu avant (4), aval, un vérin (28) agissant sur le support de roue (9, 10) d'une roue (13, 14) est relié par une extrémité au support de roue et par l'autre extrémité au châssis (1, 2) du véhicule par une liaison articulée, et une barre de couplage (29) relie les supports (9, 10) des deux roues (13, 14),
c) le vérin (28) de chaque essieu avant (4), aval, est relié par ses chambres de pression (63, 64) agissant des deux côtés du piston d'actionnement (28'), à une source de liquide hydraulique sous pression (54),
d) un calculateur électronique (71) reçoit les valeurs réelles de l'angle de braquage fourni par des capteurs pour l'essieu avant (3), amont, et à l'aide des données et caractéristiques mises en mémoire, il calcule le braquage des roues (13, 14) du ou des essieux avant (4), aval et fournit alors des ordres de régulation et de commande à la source de liquide hydraulique sous pression (54) pour un actionnement correspondant du vérin (28) de chaque essieu arrière (4),
e) une installation de sécurité est équipée d'un vérin de remplacement (82), hydraulique, articulé par une extrémité au châssis (1, 2) du véhicule et par l'autre extrémité à une partie (19) de la tringlerie de direction de l'essieu avant (3), amont, pour être commandé par celui-ci en synchronisme avec ses mouvements de direction, et de plus il est relié par ses chambres de pression (85, 86) de part et d'autre d'un piston d'actionnement (82'), à des chambres de pression de sécurité (91, 92) du vérin (28) du ou des essieux avant (4), aval, par des conduites de pression (87, 88) munies d'électrovannes (95, 96) de passage/de fermeture commandées par les ordres du calculateur (71) pour ouvrir les conduites de pression en cas normal vers un réservoir compensateur (99) et en cas d'incident les fermer, et alors transmettre les mouvements de direction des roues (11, 12) de l'essieu avant, (3), amont, en synchronisme par le vérin de remplacement (82) de l'installation de sécurité au vérin (28) pour guider les roues (13, 14) de chaque essieu avant (4), aval.

2. Camion pour fort tonnage comprenant des corps d'essieu rigides suspendus par ressort au châssis du véhicule et sur lesquels sont articulés des supports de roue avec des roues directrices, ainsi qu'une direction assistée agissant sur les roues de l'essieu avant, amont, par l'intermédiaire d'une transmission de direction et d'une tringlerie de direction en plusieurs parties agissant sur un support de roue et une barre de couplage reliant les deux supports de roue et une installation de commande pour guider les roues du ou des essieux avant, aval,
**caractérisé par**
la combinaison des caractéristiques suivantes :
a) chaque essieu avant (4), aval est relié comme l'essieu avant (3), amont, de même construction, séparément par les mêmes organes de suspension d'amortissement et de guidage au châssis (1, 2) du véhicule,
b) pour guider les roues (13, 14) de chaque essieu avant (4), aval, un vérin (30) agissant sur le support de roue (9, 10) d'une roue (13, 14) est articulé par une extrémité à ce support et par l'autre extrémité au corps (6) de l'essieu, ainsi qu'une barre de couplage (31) reliant les deux supports (9, 10) des deux roues (13, 14),
c) le vérin (30) de chaque essieu avant (4), aval, est relié par ses deux chambres de pression (63, 64) agissant sur les deux faces d'un piston d'actionnement (28') à une source de liquide hydraulique sous pression (54),
d) un calculateur électronique (71) reçoit les valeurs réelles de braquage de l'essieu avant (3), amont, détectées par des capteurs pour calculer à l'aide de données et de valeurs caractéristiques mémorisées, le braquage de direction des roues (13, 14) du ou des essieux avant (4), aval, et donner alors des ordres de régulation et de commande à la source de liquide hydraulique sous pression (54) pour un actionnement correspondant du vérin (30) de chaque essieu avant (4), aval,
e) une installation de sécurité comprenant un vérin de remplacement (82) hydraulique, articulé par une extrémité au châssis (1, 2) du véhicule et par l'autre extrémité à une partie (19) de la tringlerie de direction de l'essieu avant (3), amont et celui-ci l'actionne en synchronisme avec ses mouvements de direction, et de plus ses chambres de pression (85, 86) de part et d'autre d'un piston d'actionnement (82') sont reliées à des chambres de pression de sécurité (91, 92) du vérin (30) du ou des essieux avant (4), aval par des conduites de pression (87, 88) que des électrovannes (95, 96) de passage/fermeture, commandées par des ordres fournis par le calculateur (71), ouvrent dans la situation normale, vers un réservoir compensateur (99), et en cas d'incident ferment, pour que les mouvements de direction des roues (11, 12) de l'essieu avant (3), amont soient transmis en synchronisme par le vérin de remplacement (82) de l'installation de sécurité au vérin (30) pour diriger les roues (13, 14) de chaque essieu avant (4), aval.

3. Camion pour fort tonnage comprenant au moins deux essieux avant de même construction, dont les corps d'essieu rigides sont suspendus par ressort ou châssis du véhicule et portent des supports de roue articulés, munis de roues directrices, ainsi que d'une direction assistée agissant sur les roues de l'essieu avant, amont, comprenant une transmission de direction et une tringlerie de direction en plusieurs parties agissant sur l'un des supports de roue, ainsi qu'une barre de couplage reliant les deux supports de roue et une installation de commande pour guider les roues du ou des essieux avant, aval,
**caractérisé par**
la combinaison des caractéristiques suivantes :
a) chaque essieu avant (4), aval, construit comme l'essieu avant (3), amont, est relié séparément au châssis (1, 2) du véhicule par les mêmes organes de suspension d'amortissement et de guidage,
b) pour guider les deux roues (13, 14) de chaque essieu avant (4), aval, il y a deux vérins (34, 35), agissant chaque fois par une extrémité sur le support (9, 10) d'une roue, l'autre extrémité étant reliée au châssis (1, 2) du véhicule,
c) les vérins (34, 35) de chaque essieu avant (4) aval sont reliés par leurs chambres de pression (65, 66 ; 69, 70) agissant sur les deux faces d'un piston d'actionnement (34', 35') à une source de liquide hydraulique sous pression (54),
d) un calculateur électronique (71) reçoit les valeurs réelles des angles de braquage détectés par les capteurs pour l'essieu avant (3), amont, calcule à partir de données/valeurs caractéristiques mises en mémoire, le braquage des roues (13, 14) du ou des essieux avant (4), aval, et envoie alors des ordres de régulation et de commande à la source de liquide hydraulique (54) pour un actionnement correspondant des vérins (34, 35) de chaque essieu avant (4), aval,
e) une installation de sécurité avec un vérin de remplacement (82), hydraulique, articulé d'un côté au châssis (1, 2) du véhicule et de l'autre côté à une partie (19) de la tringlerie de direction de l'essieu avant (3), amont, et actionné en synchronisme avec les mouvements de direction de cet essieu, et de plus, dont les chambres de pression (85, 86) situées de part et d'autre d'un piston d'actionnement (82') sont reliées aux chambres de pression de sécurité (91, 92 ; 93, 94) des vérins (34, 35) du ou des essieux avant (4), aval, par chaque fois deux conduites de pression (87, 88; 89, 90) munies d'électrovannes (95, 96; 97, 98) d'ouverture/fermeture, commandées par le calculateur (71) pour ouvrir dans les conditions normales les conduites vers un réservoir compensateur (99, 100), mais en cas d'incident couper les conduites et ensuite transmettre alors les mouvements de direction des roues (11, 12) de l'essieu avant (3) en synchronisme par le vérin de remplacement (82) de l'installation de sécurité au vérin (34, 35) de chaque essieu avant (4), en aval pour assurer le guidage des roues (13, 14).

4. Camion de tonnage important comportant au moins deux essieux avant de même construction avec des corps d'essieu rigides suspendus au châssis du véhicule et des supports de roue articulés sur les essieux et portant des roues directrices ainsi qu'une direction assistée agissant sur les roues de l'essieu avant, amont, avec une transmission de direction et une tringlerie de direction en plusieurs parties agissant sur un support de roue et une barre de couplage reliant les deux supports de roue et une installation de commande pour guider les roues du ou des essieux avant, aval,
**caractérisé par**
la combinaison des caractéristiques suivantes :
a) chaque essieu avant (4), aval, est relié comme l'essieu avant (3), amont de même construction, séparément, par des organes identiques de suspension, d'amortissement et de direction au châssis (1, 2) du véhicule,
b) pour guider les deux roues (13, 14) de chaque essieu avant (4), arrière, il y a deux vérins (38, 39) agissant chaque fois sur les supports (9, 10) d'une roue, articulés à une extrémité à ce support et par l'autre extrémité, au corps (6) de l'essieu,
c) les vérins (38, 39) de chaque essieu avant (4), aval sont reliés par leurs chambres de pression (65, 66 ; 69, 70) agissant sur les deux faces d'un piston d'actionnement (34', 35') à une source de liquide hydraulique sous pression (54),
d) un calculateur électronique (71) reçoit une valeur réelle de l'angle de direction saisi par des capteurs de l'essieu avant (3), amont, pour calculer à l'aide des données et des valeurs caractéristiques mémorisées, l'angle de braquage des roues (13, 14) du ou des essieux avant (4), aval, et envoyer alors des ordres de régulation et de commande à la source de liquide hydraulique sous pression (54) pour un actionnement correspondant des vérins (38, 39) de chaque essieu avant (4), aval,
e) une installation de sécurité comprenant un vérin de remplacement (82) hydraulique, articulé d'un côté au châssis (1, 2) du véhicule et de l'autre côté à une partie (19) de la tringlerie de direction de l'essieu avant (3), amont, et actionné en synchronisme avec ses mouvements de direction, en étant d'autre part relié par ses deux chambres de pression (85, 86) de part et d'autre du piston d'actionnement (82') à des chambres de pression de sécurité (91, 92, 93, 94) des vérins (38, 39) du ou des essieux avant (4), aval, par chaque fois deux conduites de pression (87, 88 ; 89, 90) munies d'électrovannes (95, 96 ; 97, 98) de passage/blocage commandées par le calculateur (71) pour être ouvertes dans les conditions normales vers un réservoir de compensation (99, 100) et en cas d'incident, coupées et alors les mouvements de direction des roues (11, 12) de l'essieu avant (3) sont transmis en synchronisme par le vérin de remplacement (82) de l'installation de sécurité au vérin (38, 39) de chaque essieu avant (4) en aval pour le guidage par les roues (13, 14).

5. Camion selon l'une quelconque des revendications 1 à 4,
**caractérisé en ce que**
le calculateur (71) reçoit d'un capteur (72) équipant la colonne de direction (17) du volant de direction (18), par une ligne de transmission de signaux (73), l'angle de braquage de consigne des roues (11, 12) de l'essieu avant (3), amont, et d'un capteur (74, 76, 78, 79) prévu à un endroit approprié chaque fois de l'essieu avant, amont (3) et de chaque essieu aval (4), par des lignes de transmission de signaux (75, 77, 80, 81), l'angle de braquage réel de toutes les roues (11, 12, 13, 14) pour une comparaison correspondante entre la valeur de consigne et la valeur réelle.

6. Camion selon l'une quelconque des revendications 1 à 4,
**caractérisé en ce que**
la source de liquide hydraulique sous pression (54) pour manoeuvrer les vérins (28, 30, 34, 35, 38, 39) comporte une pompe auxiliaire de direction (58) qui prend le liquide hydraulique d'un réservoir de liquide hydraulique (55) par une conduite (56) pour alimenter un tiroir de commande (57), le tiroir de commande (57) recevant à une entrée l'alimentation en liquide hydraulique sous pression et ses sorties de commande sont reliées par les lignes de commande (61, 62 ; 67, 68) aux chambres de commande de pression (63, 64 ; 69, 70) du ou des vérins (28, 30, 34, 35, 38, 39) et la sortie de retour comporte une conduite de retour (59) reliée au réservoir (55) de liquide hydraulique, cette conduite étant équipée d'un dispositif de surveillance de débit (60).

7. Camion selon l'une quelconque des revendications 1 à 4,
**caractérisé en ce que**
le vérin de remplacement (82) de l'installation de sécurité est relié à l'avant par sa tige de piston (84) à la bielle pendante (19) et à l'arrière à un palier (83) solidaire du châssis, par une liaison articulée, et ce vérin est essentiellement parallèle au châssis (1, 2) du véhicule.

8. Camion selon l'une quelconque des revendications 1 à 4,
**caractérisé en ce que**
les chambres de pression de sécurité (71, 72, 73, 74) internes à un vérin (28, 30 ; 34, 35, 38, 39), se trouvent de part et d'autre d'un piston d'actionnement (28", 34", 35") prévu également sur la tige de piston (41, 44, 47, 49).

9. Camion selon l'une quelconque des revendications 1 à 4,
**caractérisé en ce que**
les conduites de pression (87, 88 ; 89, 90) qui relient les deux chambres de pression (85, 86) du vérin de remplacement (82) aux deux chambres de pression de sécurité (91, 92 ; 93, 94) d'un vérin (28, 30, 34, 35, 38, 39) comportent chaque fois une conduite de commande de coupure (101, 102 ; 103, 104) équipée d'une électrovanne de passage/coupure (95, 96 ; 97, 98) pour être reliée à un réservoir compensateur (99, 100).
